# EUROPEAN PATENT SPECIFICATION

(11) **EP 1 691 143 B1**
(45) Date of publication and mention of the grant of the patent: **11.01.2012**
(21) Application number: 06250782.7
(22) Date of filing: 14.02.2006
(51) Int. Cl.: F24H 9/00, F24D 19/00

(54) **An additive**
Zusatz
Un additif

(30) Priority: 14.02.2005 GB 0503037
(43) Date of publication of application: 16.08.2006
(73) Proprietor: Alpha Fry Limited, Woking, Surrey GU21 5RZ (GB)
(72) Inventor: Jassal, Mukash c/o Alpha Fry Limited, Woking, Surrey GU21 5RZ (GB)
(74) Representative: Setna, Rohan P.

(56) References cited:
- WO-A-00/58228
- DE-A- 1 916 628
- GB-A- 2 306 465
- GB-A- 2 377 929
- US-A- 3 740 352
- US-A- 4 406 811
- US-A- 4 711 735
- US-A- 4 816 303

## Description

The present invention relates to additives for boiler systems.

Conventional boiler systems, such as those used to heat the water of a domestic central heating system, have been found to become less efficient through constant use. This inefficiency can be attributed at least in part to the reduction of the heat transferred to the water surrounding the heating element of the boiler. The reduction in efficiency results in more energy being used to heat the water to a desired temperature.

One of the reasons for the decrease in efficiency is corrosion at the surface of the heating element(s) and/or the build up of scale deposits. The use of additives containing corrosion inhibitors and descaling agents mitigates this problem to a degree by helping to prevent the build up of corrosion products and scale on the surface of the heating element(s). However, such additives do not improve heat-transfer efficiency *per se,* but merely serve to arrest or resist a decrease in efficiency owing to corrosion and/or scale build-up on the surface of the heating element(s) .

UK Patent No. GB-B-2 162 164 describes a water-treatment method. US 3,740,352 relates to a boiler cleaning and lubricating composition. US 4,711,735 relates to a coolant additive.

It is an object of the present invention to overcome or at least mitigate some of the problems associated with the prior art and to achieve improved heat-transfer in a boiler system for example a domestic or industrial boiler system.

Accordingly, the present invention provides for the use of a defoaming wetting agent, or a low foaming wetting agent in the heat-transfer fluid of a boiler system as defined in claim 1 of the claims appended hereto.

The present invention concerns the use of a defoaming wetting agent (or a low foaming wetting agent, or a wetting agent and a defoaming agent). Surprising, the inventors have found that this component improves the heat transfer from the heating element of a given boiler system to the heat-transfer fluid (typically water) within the system when compared to an identical boiler system without the additive. The additive may also resist corrosion and/or scale build-up on the surface of the heating element. The heating element will typically comprise a metal, for example aluminium, iron or copper and alloys thereof.

It is believed that the additive used in the present invention may be effective for the following reasons. Following extensive research, the inventors have found that the decrease over time of heat-transfer efficiency may be due to bubble formation in the water surrounding the heating element(s) of the boiler. The rate of formation of the bubbles may be increased by the unevenness of the surface of the heating element. The unevenness of the surface will increase over time owing to corrosion and the build-up of scale deposits, for example calcium carbonate. Reduction in the amount of corrosion deposits on the element reduces the rate of bubble formation and consequent loss in heat transfer to the surrounding water. Moreover, the inventors' studies indicate that the size of the bubbles is an important factor. The inventors have found that the use of a defoaming wetting agent (or a low foaming wetting agent, or a wetting agent and a defoaming agent) improves heat transfer from the heating element(s) to the surrounding water. This is because the inventors have found that the defoaming wetting agent (or a low foaming wetting agent, or a wetting agent and a defoaming agent) reduces the size of bubbles forming on the surface of the element (or even prevents bubble formation on the surface of the element). Moreover, the additive used in the present invention helps reduce the amount of bubble formation, i.e. foaming. A further advantage identified by the inventors is the reduction of noise in boiler system.

As will be appreciated, the terms defoaming wetting agent and low foaming wetting agent are often used synonymously. The use of separate wetting and defoaming agents ca be considered equivalent to the use of a defoaming wetting agent/low foaming wetting agent.

Suitable defoaming wetting agents (or low foaming wetting agents) for use in the present invention preferably have an "initial" "low" result on the Ross-Miles Foam Height Test in a water solution at pH 7 and at 25°C (the additive being present in the water in an amount of 0.1 wt.%). The Ross-Miles Foam Height Test (hereinafter the "Ross-Miles test") is a conventional test in the field of surfactants. It was devised by ASTM International (RTM) and has been designated the code D1173-53(2001). The full title of the test is "Standard Test Method for Foaming Properties of Surface Active Agents". The "initial" result is the height of the foam measured immediately after the formation of the foam. An "initial" "low" result implies a foam height of up to about 25 cm, more typically up to about 10 cm.

If the foam height is measured approximately five minutes following the formation of the foam, then preferred defoaming wetting agents for use in the present invention have an initial result on the Ross-Miles test of up to about 5 cm, more preferably up to about 1 cm, most preferably up to about 0.5 cm.

The defoaming wetting agent (or low foaming wetting agent) advantageously has a dynamic surface tension of ≤ 50 mN/m in water at pH 7, wherein the surface tension is measured using a Maximum Bubble Pressure test method (the defoaming wetting agent being present in the water in an amount of 0.1 wt.%, 6 b/s at 25°C). The Maximum Bubble Pressure test method is a conventional method known in the art.

The defoaming wetting agent (or low foaming wetting agent) preferably has an equilibrium surface tension, measured using the Wilhelmy plate method, of ≤ 50 mN/m, more preferably ≤ 40 mN/m (in water in an amount of 0.1 wt.%, 6 b/s at 25°C). The Wilhelmy plate method is a conventional method known in the art.

Surface tension may also be measured using the DuNouy ring method. This is a conventional static test method and involves pulling a ring (standard perimeter about 60 mm) through the liquid/air interface and measuring the downward force directed to the ring. In the present invention, a reduction to about 42 mN/m at 25°C is observed (from about 70 for water) .

Defoaming wetting agents (or low foaming wetting agents) having such properties have been found to reduce the size of bubbles nucleating on the surface of a heating element immersed in water. Such wetting agents may even prevent the formation of bubbles on the surface of the heating element.

A preferred defoaming wetting agent for use in the present invention is available from Air Products (RTM) under the trade name EnviroGem AD01 surfactant. This surfactant is an alkane diol. A further defoaming wetting agent, which may be used on its own or in combination with other defoaming wetting agents sold under the trade name Surfynol MD-20 Defoamer (oxirane[2-(ethylhexyl)oxy]methyl]-RX). Low foaming wetting agents that may be used, either on their own or in combination with other wetting agents, include Beta alanine, N-(2-carboxyethyl)-N-(2-ethylhexyl),Na Salt, available from Lakeland Laboratories Limited under the trade name AMA LF 40 (CAS No. 94441-92-6; EINECS No. 305-318-6), and poly(oxy-1,2-ethanediol)-phenyl-hydroxy phosphate, available from Lakeland Laboratories Limited under the trade name PPE 604 (CAS No. 39464-70-5).

The wetting agent (eg defoaming wetting agent / low foaming wetting agent or wetting agent) for use in the present invention is based on sarcosine. The wetting agent has the general formula: 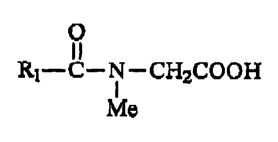 wherein R₁ is a C6 to C18 saturated or unsaturated, branched or linear carbon chain or a salt thereof. Preferably R₁ is a linear C6 to C18 alkyl or alkenyl chain. Salts of the above compound may be alkali metal salts, such as sodium salts, or ammonium (NH₄⁺) salts. The wetting agent may contain a mixture of compounds (and/or salts thereof) of the above formula. The wetting agent may preferably comprise one or more of sodium lauroyl sarcosinate, sodium myristoyl sarcosinate, sodium cocoyl sarcosinate and/or sodium oleoyl sarcosinate. For these wetting agents, it is preferable that a defoaming agent is also present in the additive. These are conventional in the art.

The corrosion inhibitor acts to prevent or resist the corrosion of metal in water (typically tap water). Corrosion inhibitors are well know in the art and may comprise inorganic or organic compounds. The anti-scaling agent acts to prevent or resist the build-up of scale on the surface of the heating element. Anti-scaling agents are also well know in the art. Thus the present invention relies on conventional corrosion inhibitors and anti-scaling agents. Examples of commercially available formulations that include corrosion inhibitors and/or anti-scaling agents are Fernox Protector, Fernox MB-1 Protector, Fernox Superconcentrate Protector and Fernox Alphi-11 Protector, Sentinel X100, Salamander Corrosion Guard, Kamco Systemsafe DM, Aqueous Logic Corrosion Inhibitor.

The additive used in the present invention preferably comprises the defoaming wetting agent (or a low foaming wetting agent, or a wetting agent and a defoaming agent) and one or both of a corrosion inhibitor and an anti-scaling agent. Such combinations have surprising been found to result in a significant improvement in heat transfer efficiency even after prolonged use of the boiler system. The additive preferably comprises the defoaming wetting agent (or a low foaming wetting agent, or a wetting agent and a defoaming agent) and a corrosion inhibitor and an anti-scaling agent.

It will be appreciated that the additive used in the present invention may comprise one or more defoaming wetting agents and/or one or more low foaming wetting agents and/or one or more wetting agents and defoaming agents, including combinations of two or more thereof.

If desired, the additive may comprise further additional surfactants such as, for example, surfactants based on ethoxylated acetylenic diols. Preferably, the further surfactants comprise one or more of tetramethyl decyn diols, more preferably ethoxylated 2,4,7,9-tetramethyl-5-decyn-4,7-diol (CAS No. 9014-85-1) and 2,4,7,9-tetramethyl-5-decyne-4,7-diol (CAS No. 126-86-3).

Preferably, the additive is dispersed in a suitable solvent. The components may be dissolved or suspended in the solvent. Preferably, the solvent comprises water. Other solvents may be used singularly or in combination with water. Examples include ethylene glycol, monopropylene glycol and triethanolamine. In the case of a solvent comprising water and one or more of ethylene glycol, monopropylene glycol and or triethanolamine, the ratio of water to the other solvent(s) is preferably from 1:1 to 1:10, more preferably from 1:2 to 1:5. Preferably, the water is demineralised water. A solvent comprising both water and one or more of ethylene glycol, monopropylene glycol and or triethanolamine has been found to be surprisingly effective at suspending and/or dissolving the components of the additive according to the present invention, hence preventing their coagulation. This solvent also facilitates dissolution and/or suspension of the components of the additive in a larger volume of water such as found, for example, in the water tank of a boiler. The defoaming wetting agent is typically present in the additive in an amount of up to 5 wt.%, more typically up to 2 wt.%.

Once prepared, the additive used in the present invention may be added to a boiler system in any convenient manner. For example, the additive may be placed in the water tank of a boiler, either before or after the tank has been filled with water. The composition will then disperse in the water, if already present, or when the tank is filled with water. Agitation may be used to aid dispersal of the composition in the water. Alternatively, the additive can be injected through the air-bleed valve of a radiator, thereby entering the boiler system. This is described in UK Patent No. GB-B-2 162 164.

The heat-transfer fluid typically comprises water.

The present invention will now be further illustrated by the following non-limiting Examples.

### Examples

The following compositions exemplify the additive according to the present invention and may be used in boiler systems to improve heat transfer from the heating element(s) to the water. The intended function of each component in the compositions is indicated. It will be appreciated that certain components may exhibit more than one function. The compositions have been mixed with a commercially available formulation, Fernox Protector (other commercially available formulations include Fernox MB-1 Protector, Fernox Superconcentrate Protector and Fernox Alphi-11 Protector). A reduction in surface tension (DuNouy ring method) was observed for all of the formulations. The additive compositions according to the present invention are advantageous because they improve heat transfer efficiency and also reduce noise in the boiler system. The inventors have found that the use of a defoaming wetting agent (or a low foaming wetting agent, or a wetting agent and a defoaming agent) reduces the size of bubbles forming on the surface of the hearting element (or even prevents bubble formation on the surface of the element). Moreover, the additive according to the present invention helps reduce the amount of bubble formation, i.e. foaming.

### Example 1

| **Raw Material** | **Cas No.** | **% wt** |
|---|---|---|
| Demin. Water (solvent) | - | 28.7 |
| Monopropylene Glycol (solvent) | 57-55-6 | 57.3 |
| Surfynol EnviroGem AD-01 (defoaming wetting agent) | | 0.23 |
| Hamposyl L-30 (wetting agent) | 137-16-6 | 6.9 |
| AMALF-40 (low foaming wetting agent) | | 6.9 |

### Example 2

| **Raw Material** | **Cas No.** | **% wt** |
|---|---|---|
| Demin. Water | - | 27.8 |
| Monopropylene Glycol | 57-55-6 | 55.6 |
| Surfynol MD-20 | | 0.7 |
| Surfynol 420 | | 0.2 |
| Surfynol EnviroGem AD-01 | | 0.2 |
| Hamposyl L-30 | 137-16-6 | 8.9 |
| Morpholine (solvent) | 110-91-8 | 6.7 |

### Example 3

| **Raw Material** | **Cas No.** | **% wt** |
|---|---|---|
| Demin. Water | - | 18.8 |
| Monopropylene Glycol | 57-55-6 | 68.2 |
| Surfynol MD-20 | | 0.7 |
| Surfynol 420 | | 0.2 |
| Surfynol EnviroGem AD-01 | | 0.2 |
| Hamposyl L-30 | 137-16-6 | 11.8 |

### Example 4

| **Raw Material** | **Cas No.** | **% wt** |
|---|---|---|
| Demin. Water | - | 15.1 |
| Monopropylene Glycol | 57-55-6 | 69.8 |
| Surfynol MD-20 | | 1.2 |
| Surfynol 420 | | 0.5 |
| Surfynol EnviroGem AD-01 | | 1.9 |
| Hamposyl L-30 | 137-16-6 | 11.6 |

### Example 5

| **Raw Material** | **Cas No.** | **% wt** |
|---|---|---|
| Demin. Water | - | 14 |
| Monopropylene Glycol | 57-55-6 | 69.8 |
| Surfynol MD-20 | | 1.9 |
| Surfynol 465 (defoaming wetting agent) | | 0.5 |
| Surfynol EnviroGem AD-01 | | 2.3 |
| Hamposyl L-30 | 137-16-6 | 11.6 |

### Example 6

| **Raw Material** | **Cas No.** | **% wt** |
|---|---|---|
| Demin. Water | - | 25.3 |
| Monopropylene Glycol | 57-55-6 | 57.5 |
| Surfynol MD-20 | | 0.7 |
| Surfynol 420 | | 0.2 |
| Surfynol EnviroGem AD-01 | | 0.2 |
| Hamposyl L-30 | 137-16-6 | 5.7 |
| AMALF-40 | | 5.7 |
| Morpholine | 110-91-8 | 4.6 |

### Example 7

| **Raw Material** | **Cas No.** | **% wt** |
|---|---|---|
| Demin. Water | - | 17.4 |
| Monopropylene Glycol | 57-55-6 | 69.6 |
| Surfynol MD-20 | | 0.7 |
| Surfynol 420 | | 0.2 |
| Surfynol EnviroGem AD-01 | | 0.5 |
| Hamposyl L-30 | 137-16-6 | 11.6 |

## Claims

1. Use of a defoaming wetting agent in the heat-transfer fluid of a boiler system comprising a heating element to reduce the size of bubbles forming on the surface of said heating element, wherein the defoaming wetting agent has the formula: 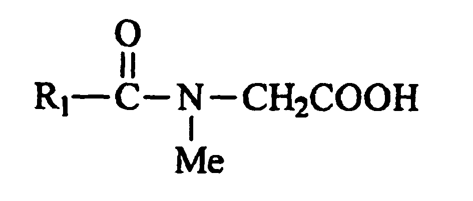 wherein R₁ is a C6 to C18 saturated or unsaturated, branched or linear carbon chain or a salt thereof.

2. Use as claimed in claim 1, wherein the wetting agent comprises one or more of sodium lauroyl sarcosinate, sodium myristoyl sarcosinate, sodium cocoyl sacrosinate and sodium oleoyl sarcosinate.

3. Use as claimed in claim 1 or claim 2, wherein the heat-transfer fluid further comprises one or both of a corrosion inhibitor and an anti-scaling agent.

4. Use as claimed in any one of the preceding claims, wherein the defoaming wetting agent has a dynamic surface tension of ≤ 50 mN/m in water at pH 7, wherein the surface tension is measured using a Maximum Bubble Pressure test method (the defoaming wetting agent being present in the water in an amount of 0.1 wt.%, 6 b/s at 25 °C).

5. Use as claimed in any one of the preceding claims, wherein the defoaming wetting agent has an initial foam height of ≤ 5 cm on the Ross-Miles Foam Height Test (the defoaming wetting agent being present in water at pH 7 at 25 °C in an amount of 0.1 wt%).

## Patentansprüche

1. Verwendung eines entschäumenden Benetzungsmittels in dem Wärmeträgerfluid eines ein Heizelement aufweisen den Boiler-bzw. Erhitzersystems zur Reduzierung der sich auf der Oberfläche des Heizelements bildenden Größe von Blasen, **dadurch gekennzeichnet, dass** das entschäumende Benetzurigsmittel die folgende Formel aufweist: 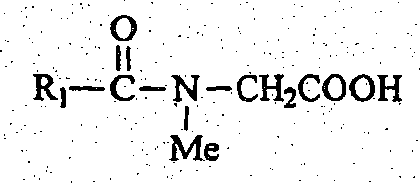 wobei R₁ eine C6- bis C₁₈- gesättigte oder ungesättigte, verzweigte oder lineare Kohlenstoffkette oder ein Salz davon ist.

2. Verwendung nach Anspruch 1, **dadurch gekennzeichnet, dass** das Benetzungsmittel einen oder mehrere der folgenden Stoffe aufweist: Natrium-Lauroylsarcosin, Natrium-Myristoyolsarcosin, Natrium-Cocoylsarcosin und Natrium-Oleoylsarcosin.

3. Verwendung nach Anspruch 1 oder Anspruch 2, **dadurch gekennzeichnet, dass** das Wärmeträgerfluid des Weiteren ein Korrosionsschutzmittel und/oder ein Kalkschutzmittel aufweist.

4. Verwendung nach einem der vorhergehenden Ansprüche, **dadurch gekennzeichnet, dass** das entschäumende Benetzungsmittel eine dynamische Oberflächenspannung von ≤ 50 mN/m in Wasser bei einem pH-Wert von 7 aufweist, wobei die Oberflächenspannung unter Verwendung eines Testverfahrens zur Messung des maximalen Blasendrucks (Maximum Bubble Pressure Test) gemessen wird (das entschäumende Benetzungsmittei liegt im Wasser in einer Menge von 0,1 Gew.-%, 6 b/s bei 25°C vor).

5. Verwendung nach einem der vorhergehenden Ansprüche, **dadurch gekennzeichnet, dass** das entschäumende Benetzungsmittel eine anfängliche Schaumhöhe von ≤ 5cm bei dem sog. Ross-Miles Foam Height Test aufweist (das entschäumende Benetzungsmittel liegt im. Wasser bei einem pH-Wert von 7 bei 25°C in einer Menge von 0,1 Gew.-% vor).

## Revendications

1. Utilisation d'un agent de mouillage anti-mousse dans le fluide de transfert thermique d'un système de chaudière comprenant un élément chauffant pour réduire la taille des bulles se formant sur la surface dudit élément chauffant, où l'agent de mouillage anti-mousse a la formule: 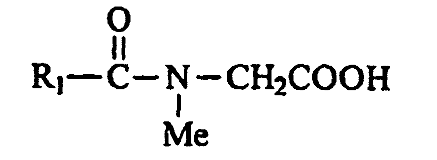 où R₁ est une chaîne de carbone C6 à C18 saturée ou insaturée, ramifiée ou linéaire, ou un sel de celui-ci.

2. Utilisation selon la revendication 1, où l'agent de mouillage comprend un ou plusieurs parmi sodium lauroyl sarcosinate, sodium myristoyl sarcosinate, sodium cocoyl sacrosinate et sodium oléoyl sarcosinate.

3. Utilisation selon la revendication 1 ou la revendication 2, où le fluide de transfert de chaleur comprend en outre un ou les deux parmi un inhibiteur de corrosion et un agent anti-écaillage.

4. Utilisation selon l'une quelconque des revendications précédentes, où l'agent de mouillage anti-mousse a une tension de surface dynamique de ≤ 50 mN/m dans l'eau au pH 7, où la tension de surface est mesurée en utilisant une méthode de test de Pression de Bulles Maximum (l'agent de mouillage anti-mousse étant présent dans l'eau en une quantité de 0,1% en poids, 6 b/s à 25°C).

5. Utilisation selon l'une quelconque des revendications précédentes, où l'agent de mouillage anti-mousse a une hauteur de mousse initiale de ≤ 5 cm lors du test de la hauteur de mousse de Ross-Miles (l'agent de mouillage anti-mousse étant présent dans l'eau au pH 7 à 25°C en une quantité de 0,1% en poids).
